# EUROPEAN PATENT APPLICATION

(11) **EP 4 674 546 A1**
(43) Date of publication of application: **07.01.2026**
(21) Application number: 25185776.9
(22) Date of filing: 27.06.2025
(51) Int. Cl.: B22F 12/00, B22F 12/30, B22F 12/57, B22F 12/90, B29C 64/232, B29C 64/245, B29C 64/255, B33Y 10/00, B33Y 30/00, B33Y 50/02, B22F 10/31, B22F 10/85

(54) **ADDITIVE MANUFACTURING APPARATUS**

(30) Priority: 28.06.2024 JP 2024105717
(71) Applicant: DMG Mori Co., Ltd., Nara-shi, Nara 630-8122 (JP)
(72) Inventor: OTAWA, Takeshi, Nara City, Nara, 630-8122 (JP)
(74) Representative: Isarpatent

(57) **Abstract**

[Object] To achieve highly accurate position control of a table and improve the accuracy of additive manufacturing in powder-bed additive manufacturing.

[Solution]

[SOLUTION TO PROBLEM] An additive manufacturing apparatus 1 includes: a table 12 on which a powder material M is to be spread over; a material supply mechanism 14 configured to supply a preset weight of the powder material to the table; a drive mechanism 13 configured to support the table and move the table in an up-down direction; a support structure 16 configured to support the drive mechanism and support the table via the drive mechanism; a control unit 17 configured to control the position of the table in the up-down direction at the time of supply of the powder material to the table. The control unit 17 is configured to correct the position of the table in the up-down direction at the time of supply of the powder material to the table based on a posture change of at least one of the drive mechanism 13 and the support structure 16 due to the weight of the powder material M spread on the table 12.

## Description

### [TECHNICAL FIELD]

The present invention relates to an additive manufacturing apparatus.

### [BACKGROUND ART]

An additive manufacturing apparatus is known as an apparatus for layering and curing materials to form a 3-dimensional object. There are various methods of additive manufacturing, one of which is powder-bed additive manufacturing. In the powder-bed additive manufacturing, a powder material is first spread over the table in the apparatus to form a thin layer of the powder material. Next, a beam such as a laser is directed to a selected position of the powder material to cure the powder material at that position. After the powder material is selectively cured, additional powder material is formed on the cured powder material, and the powder material is then cured by the beam. This process is repeated to form an object.

In the powder-bed additive manufacturing, the powder material is successively layered on the table, and the thickness of the laminated powder material increases as the layering progresses. Thus, in the additive manufacturing apparatus, the position of the table in the up-down direction is adjusted as the lamination progresses. This adjustment of the table position is generally based on the thickness of the layered powder material. However, in the additive manufacturing, the weight of the powder material loaded on the table increases as the lamination progresses. Therefore, the table position may deviate from a predetermined position depending on the weight of the powder material. Deviation of the table position from the predetermined position affects the accuracy of the additive manufacturing, and it is therefore desirable to precisely adjust the table position.

The additive manufacturing apparatus is disclosed, for example, in Patent Document 1. In this additive manufacturing apparatus, a table is driven by a drive device and the drive device is controlled by a control device. The control device controls the drive device such that the drive device matches the current load on the table, based on the amount of material spread per layer and the like.

### [PRIOR ART DOCUMENTS]

### [PATENT DOCUMENTS]

[Patent Document 1] Japanese Unexamined Patent Publication No. 2019-25762

### [SUMMARY OF THE INVENTION]

### [PROBLEM TO BE SOLVED]

The additive manufacturing apparatus of Patent Document 1 controls the position of the table in consideration of the load on the table to improve the accuracy of the table position control. However, even with this additive manufacturing apparatus, the table position may still deviate from a target position. Since, in additive manufacturing, the thickness of the powder material spread over on the table in a single supply is, for example, several tens of micrometers, it is desirable that the position control of the table be performed with higher accuracy. In particular, in additive manufacturing of a large object or in multi-part additive manufacturing, a large amount of powder material is supplied onto the table, thereby increasing the load on the table. For this reason, the table position is likely to deviate from the target position.

It is an object of the present invention to achieve highly accurate position control of a table and to improve the accuracy of additive manufacturing, in powder-bed additive manufacturing.

### [SOLUTION TO PROBLEM]

(1) An additive manufacturing apparatus of the present invention is an additive manufacturing apparatus configured to form an object by powder-bed additive manufacturing in which a beam is emitted onto a powder material spread over a table to cure the powder material, including: a table on which the powder material is to be spread over; a material supply mechanism configured to supply a preset weight of the powder material to the table; a drive mechanism configured to support the table and move the table in an up-down direction; a support structure configured to support the drive mechanism and support the table via the drive mechanism; and a control unit configured to control the drive mechanism to move the table step by step in the up-down direction, thereby controlling a position of the table in the up-down direction at a time of supply of the powder material to the table so that the powder material is sequentially layered on the table by the material supply mechanism, wherein the control unit is configured to correct the position of the table in the up-down direction at the time of supply of the powder material to the table based on a posture change of at least one of the drive mechanism and support structure due to the weight of the powder material spread on the table.

In the above additive manufacturing apparatus, the powder material is sequentially layered on the table. Therefore, the load applied to the table increases as the layering progresses, causing a change in the posture of at least one of the drive mechanism and support structure that support the table. When the postures of the drive mechanism and support structure change, the position of the table supported by them tends to deviate from a target position, making it difficult to control. However, the control unit can match or bring the table closer to the target position at the time of supply of the powder material to the table by correcting the position of the table considering the posture change of at least one of the drive mechanism and support structure. Therefore, with the above additive manufacturing apparatus, it is possible to achieve highly accurate position control of the table and improve the accuracy of additive manufacturing.

(2) In the additive manufacturing apparatus described in the above (1), the control unit may be configured to control the table based on a preset position command so that the table is positioned at a target position when the powder material is supplied, and correct the position command so as to reduce displacement of the table from the target position due to the weight of the powder material spread over the table.

In the additive manufacturing apparatus described in the above (2), the displacement (deviation) of the table from the target position is corrected in advance. Therefore, the table can be positioned at or close to the target position before the powder material is supplied. In this way, the powder material can be spread over the table and irradiated with a beam with high accuracy, thereby improving the additive manufacturing accuracy.

(3) In the additive manufacturing apparatus described in the above (2), the control unit may be configured to correct the position command based on a preset amount of displacement of the table from the target position due to a posture change of at least one of the drive mechanism and support structure.

As mentioned above, in the additive manufacturing apparatus, the weight of the powder material causes a change in the posture of at least one of the drive mechanism and support structure, resulting in the position of the table being prone to deviation from the target position. In the additive manufacturing apparatus described in the above (3), on the other hand, the relationship between the weight of the powder material and the posture change of at least one of the drive mechanism and support structure, as well as the deviation of the table from the target position, is identified in advance, and the position of the table is controlled based on this relationship. Therefore, with the above additive manufacturing apparatus, it is possible to achieve highly accurate position control of the table and improve the accuracy of additive manufacturing.

(4) In the additive manufacturing apparatus described in the above (2), the control unit may be configured to change a correction amount for the position command according to the number of times the powder material is supplied to the table.

The weight of the powder material loaded on the table increases with progress in the processing. In the additive manufacturing apparatus described in the above (4), the amount of correction of the table position is changed with progress in the processing. Therefore, the table position can be brought at or near the target position even in processing where the powder material is supplied many times and the weight of the powder material loaded on the table significantly increases. Therefore, with the above additive manufacturing apparatus, it is possible to achieve highly accurate position control of the table and improve the accuracy of additive manufacturing.

(5) In the additive manufacturing apparatus described in the above (1), the drive mechanism may be arranged at a position shifted in a horizontal direction with respect to the table, extend in the up-down direction, and support and move the table between ends in the up-down direction thereof.

In the additive manufacturing apparatus described in the above (5), the drive mechanism that supports the table extends in the up-down direction. In the additive manufacturing apparatus having this configuration, the drive mechanism tends to tilt (deflect) due to the load applied to the table, and its posture is prone to change. However, the control unit performs position control of the table considering the deviation of the table from the target position due to the weight of the powder material. Therefore, with the additive manufacturing apparatus, the accuracy of the additive manufacturing can be improved, even if the configuration is such that the table is likely to deviate from the target position due to the weight of the powder material.

(6) In the additive manufacturing apparatus described in the above (5), the support structure may be provided to be positioned outward of the drive mechanism in the horizontal direction and be adjacent to the drive mechanism, and supports both ends of the drive mechanism.

In the additive manufacturing apparatus described in the above (6), the support structure supports the drive mechanism that is prone to change in posture because it extends in the up-down direction. Therefore, the posture of the support structure is also likely to change due to the change in the posture of the drive mechanism. However, the control unit performs position control of the table considering the deviation of the table from the target position due to the weight of the powder material. Therefore, with the additive manufacturing apparatus, the accuracy of the additive manufacturing can be improved, even if the configuration is such that the table is likely to deviate from the target position due to the weight of the powder material.

### [ADVANTAGEOUS EFFECT OF THE INVENTION]

According to the additive manufacturing apparatus of the present invention, it is possible to achieve highly accurate position control of a table and improve the accuracy of additive manufacturing, in powder-bed additive manufacturing.

### [BRIEF DESCRIPTION OF THE DRAWINGS]

[FIG. 1] FIG. 1 is a front view schematically showing a configuration of an additive manufacturing apparatus of the present embodiment.
[FIG. 2] FIG. 2 is an enlarged view of a drive mechanism and its peripheral components.

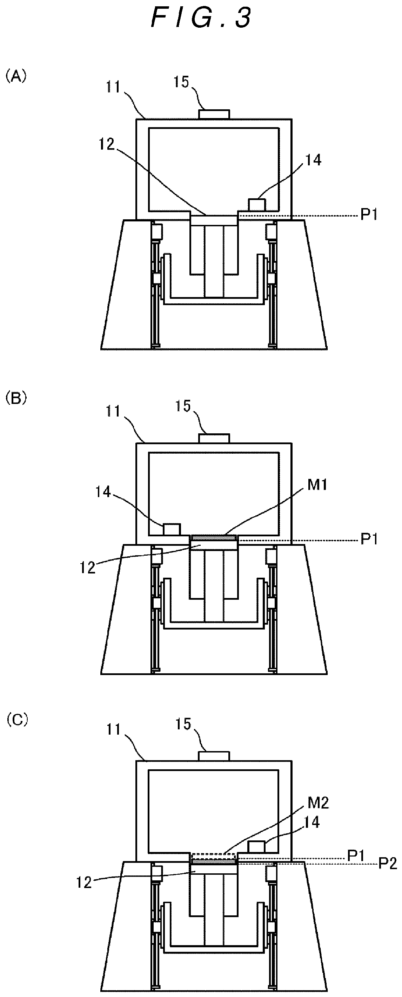

[FIG. 3] FIG. 3 schematically shows a process of layering a powder material on a table of the additive manufacturing apparatus.
[FIG. 4] FIG. 4 is a functional block diagram illustrating a control unit, a drive mechanism, and a material supply mechanism in the additive manufacturing apparatus of the present embodiment.
[FIG. 5] FIG. 5 is a diagram showing an information table describing the relationship among the powder material layered on the table, the weight of the powder material, and a posture change amount of the drive mechanism and a support structure.

### [DETAILED DESCRIPTION]

Embodiments of the present invention will be described below with reference to the drawings.

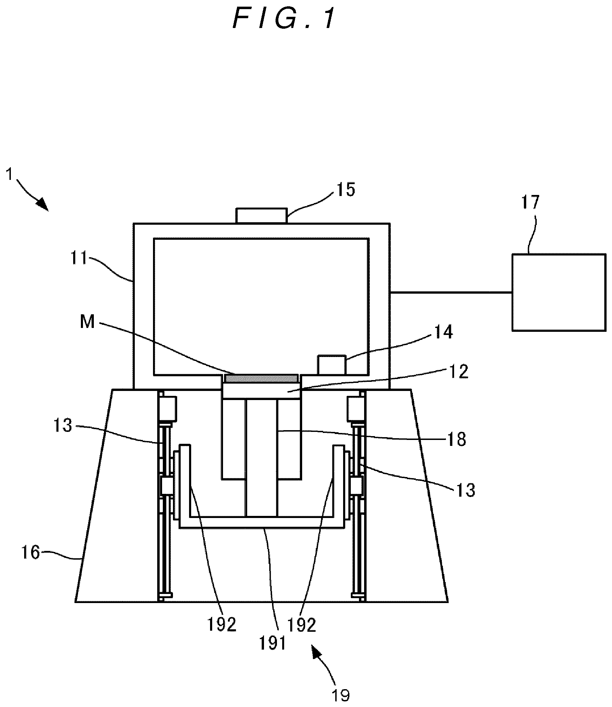

FIG. 1 is a front view schematically showing a configuration of an additive manufacturing apparatus of the present embodiment. An additive manufacturing apparatus 1 is a device that performs powder-bed additive manufacturing. The additive manufacturing apparatus 1 includes a processing chamber 11 for performing additive manufacturing. The processing chamber 11 has a housing-like shape. A portion of the lower surface of the processing chamber 11 is constituted by a table 12 on which an object is formed. The table 12 is configured to be movable in the up-down direction and is driven by a drive mechanism 13. The drive mechanism 13 is controlled by a control unit 17. On the table 12, a powder material is supplied from the material supply mechanism 14 to form a powder material M. Once a layer of the powder material M is formed, a beam is emitted from the beam head 15 to a selected position of the powder material M, and the powder material at that position is cured. When the beam emission is completed, the drive mechanism 13 lowers the table 12. Then, the next powder material M is formed on top of the powder material M having been formed, and the beam is emitted. This process is repeated to form a 3-dimensional object.

Here, the front of the additive manufacturing apparatus 1 refers to the surface on the side where a door is provided for taking out a formed object from the processing chamber 11. In the additive manufacturing apparatus 1, the direction from the rear to the front is called the forward, and the direction from the front to the rear is called the rearward. In a front view, the direction toward the left of the additive manufacturing device 1 is referred to as the leftward, and the direction toward the right is referred to as the rightward. In front view, a direction toward the top (ceiling) of the additive manufacturing device 1 is referred to as upward, and a direction to the bottom (floor) is referred to as downward. The up-down direction refers to the direction that coincides with the vertical direction when the additive manufacturing device 1 is arranged. The horizontal direction refers to a direction contained in a plane whose normal is the up-down direction. In the following, the configuration of the additive manufacturing apparatus 1 will be described in detail.

The beam head 15 is provided outside the processing chamber 11 and emits a beam toward the powder material M through an emission window provided in the processing chamber 11. The beam head 15 emits a laser beam, for example. However, the beam head 15 may emit other beams, such as an electron beam. The beam head 15 is configured to emit a beam to a selected position of the powder material M spread over the table 12.

Table 12 is also referred to as a build platform, on which powder materials are layered to form an object. The table 12 is configured to be movable downward below the lower surface of the processing chamber 11. The table 12 moves downward as the lamination of the powder material M progresses. The shape of the table 12 is not particularly limited, as long as the powder material M can be layered. On the lower surface of the table 12, a column 18 is provided. The column 18 has a cylindrical shape and extends downward from the lower surface of the table 12. The column 18 is attached to a basket 19.

The basket 19 has a box-like shape. The basket 19 includes a bottom 191 on which the column is attached, and sidewalls 192 extending upward from the bottom 191. The bottom 191 has a flat plate shape and is provided horizontally. One sidewall 192 extends upward from the left end of the bottom 191. Another sidewall 192 extends upward from the right end of the bottom 191. The sidewall 192 may be provided at the front end of the bottom 191 or may be provided at the rear end. The basket 19 having such a configuration is attached to the drive mechanism 13. The drive mechanism 13 is provided on the left side and the right side of the table 12, respectively.

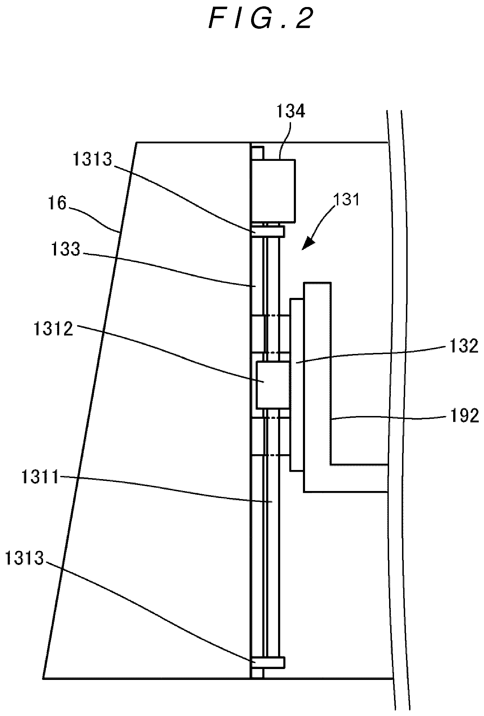

FIG. 2 is an enlarged view of a drive mechanism and its peripheral configuration. Here, the drive mechanism provided on the left side of the table 12 will be described; however, the drive mechanism on the right side has a similar configuration as well. The drive mechanism 13 includes a ball screw 131, a slide unit 132 that moves along the ball screw 131, a guide unit 133 that guides the slide unit 132 to move in the up-down direction, and a drive device 134 that rotates the ball screw 131. Note that the drive mechanism 13 includes a position sensor (not shown), such as a linear encoder, to detect the position of the table 12 in the up-down direction.

The ball screw 131 is composed of a screw shaft 1311 and a ball nut 1312. The screw shaft 1311 is rotated about its central axis by the drive device 134. The screw shaft 1311 extends in the up-down direction. Both ends in the up-down direction of the screw shaft 1311 are fixed to the support structure 16 via a fixing member 1313. The fixing member 1313 includes a bearing or the like and is configured to enable rotation of the screw shaft 1311 while making the screw shaft 1311 immovable relative to the support structure 16. The ball nut 1312 moves in the up-down direction along the screw shaft 1311 as the screw shaft 1311 rotates. The slide unit 132 is attached to the ball nut 1312.

To the slide unit 132, the sidewall 192 of the basket 19 is attached. The slide unit 132 moves in the up-down direction together with the ball nut 1312. The slide unit 132 is inserted into the guide unit 133. The guide unit 133 extends in the up-down direction. The guide unit 133 restricts rotation of the slide unit 132 caused by rotation of the screw shaft 1311 and guides the slide unit 132 to move in the up-down direction. The guide unit 133 is attached to the support structure 16.

The support structure 16 is provided further outward than the table 12 and the drive mechanism 13. The support structure 16 is provided on the left side and the right side of the table 12. The support structure 16 is provided adjacent to the drive mechanism 13. Above the support structure 16, the processing chamber 11 is provided and the support structure 16 supports the processing chamber 11. The support structure 16 constitutes a foundation that supports the processing chamber 11, the drive mechanism 13, and the table 12.

In this way, in the additive manufacturing apparatus 1, the table 12, the drive mechanism 13, and the support structure 16 are connected directly or indirectly. Therefore, the load applied to the table 12 is also applied to the support structure 16 through the table 12 and the drive mechanism 13. That is, the additive manufacturing apparatus 1 is configured such that the load of the powder material M layered on the table 12 is applied to the drive mechanism 13 and the support structure 16. Therefore, the weight of the powder material placed on the table 12 may cause a change in the posture of the drive mechanism 13 and the support structure 16. A change in the posture refers to the drive mechanism 13 and the support structure 16 tilting or deforming due to deflection, as compared to a state without powder material on the table 12. For example, when the weight of the powder material is applied to the table 12, an inward-directed force is applied to the ball screw 131 and the guide unit 133, which may cause a change in the posture of the ball screw 131 and the guide unit 133. Additionally, the inward-directed force is also applied to the support structure 16 that supports the ball screw 131 and the guide unit 133, which may cause a change in the posture of the support structure 16. As a result, the table 12 may deviate from the target position, which can affect the accuracy of the additive manufacturing.

In view of the above, in the additive manufacturing apparatus 1 of this embodiment, the position of the table 12 is controlled considering the changes in the posture of the drive mechanism 13 and the support structure 16. This will be detailed hereinbelow; however, first, the position control of the table 12 without considering the weight of the powder material applied to the table 12 will be described.

IG. 3 schematically shows a process of layering a powder material on a table of the additive manufacturing apparatus. The process proceeds in the order of (A) to (C) in the figure. First, referring to (A) in the figure, the table 12 which is initially positioned on the same plane as the lower surface of the processing chamber 11 is lowered so that it is positioned below the lower surface of the processing chamber 11. The amount of downward movement of the table 12 is not particularly limited, but for example, the amount corresponds to the thickness of a first layer of powder material M1 to be spread over. That is, the table 12 is moved to a target position P1 for spreading over the first layer of powder material M1.

Next, referring to (B) in the figure, the material supply mechanism 14 moves in the horizontal direction along the lower surface of the processing chamber 11 to spread over the first layer of powder material M1 on the table 12. The material supply mechanism 14 lays the powder material on the table 12, for example, by using rollers. Then, the beam head 15 emits a beam to a predetermined position according to a processing program, thereby curing the powder material.

Next, referring to (C) in the figure, the table 12 is then lowered to the target position P2 that is lower than the target position P1. The target position P2 is the position of table 12 for spreading over a second layer of powder material M2. At the target position P2, the powder material M1 on the table 12 is positioned below the lower surface of the processing chamber 11. In this case, the amount of downward movement of the table 12 is not particularly limited, but for example, the amount corresponds to the thickness of the second layer of powder material M2 to be spread over. Then, the material supply mechanism 14 spreads over a new layer of powder material M2 on the previously spread over powder material M1, in the same manner as described above. Then, the powder material at a predetermined position of the new layer of powder material M2 is cured by the beam emitted from the beam head 15. In the additive manufacturing apparatus 1, this process is repeated to form a 3-dimensional object.

However, in reality, the weight of the powder material is applied to the table 12, causing a change in the posture of the drive mechanism 13 and the support structure 16, and as a result, the position of the table 12 deviates from the target position. The deviation from the target position of the table 12 increases as the amount of powder material spread over on the table 12 increases. In view of the above, in the additive manufacturing apparatus 1 of this embodiment, the control unit 17 controls the position of the table 12 to reduce the deviation (displacement) from the target position of the table 12.

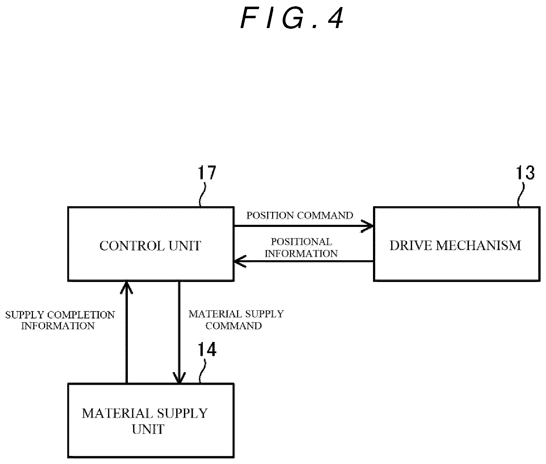

FIG. 4 is a functional block diagram illustrating a control unit, a drive mechanism, and a material supply mechanism in the additive manufacturing apparatus of the present embodiment. The control unit 17 is constituted by a computer including a processor, a memory, and the like, and controls each part of the additive manufacturing apparatus.

When a processing program for forming an object is executed in response to an external input or the like, the control unit 17 transmits a position command to the drive mechanism 13 to move the table 12 to a target position for spreading over the first layer of powder material. Upon receiving the position command, the drive mechanism 13 moves the table 12 to the target position. The position of the table 12 is transmitted from the position sensor to the control unit 17 as positional information.

The control unit 17, when determining that the table 12 has reached the target position based on the information from the position sensor, transmits a material supply command to the material supply mechanism 14. The material supply mechanism 14 moves in the horizontal direction upon receiving a material supply command and lays the powder material on the table 12. The material supply mechanism 14 transmits supply completion information to the control unit 17 after finishing spreading over the powder material.

The control unit 17, upon receiving the supply completion information, moves the table 12 to a target position for laying the second layer of powder material. In this case, the control unit 17 transmits a corrected position command, which is a position command to be transmitted to the drive mechanism 13 after correction. The corrected position command is obtained by correcting the amount of movement from the target position P1 of the table 12 for spreading over the first layer of the powder material to the target position P2 for spreading over the second layer of the powder material by a displacement amount of the table 12 from the target position P2 due to the weight of the powder material. The corrected position command is written in advance in the information table stored in the memory of the control unit 17.

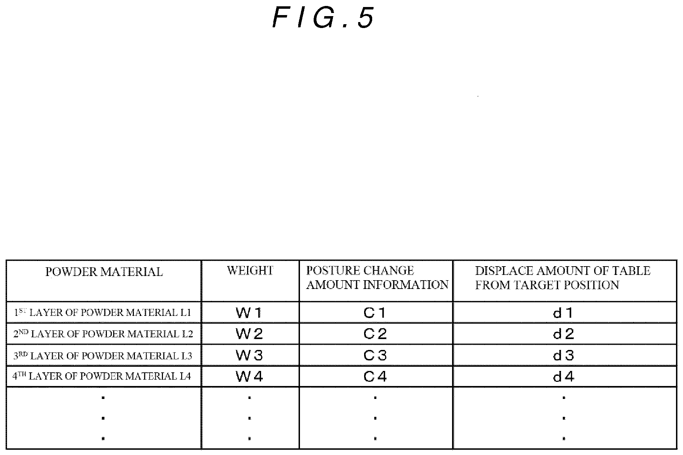

FIG. 5 is a diagram showing an information table describing the relationship among powder material layered on the table, the weight of the powder material, and a posture change amount of the drive mechanism and the support structure. The information table describes the weight information, which is information of the weight of each layer of powder material that is supplied step by step to the table 12. For example, the weight information describes that the weight of the first layer of powder material L1 is W1 and the weight of the second layer of powder material L2 is W2. In the present embodiment, the layers of powder material supplied step by step on the table 12 is assumed to have the same weight, but the weight of the layers of powder material supplied may be different. Further, the information table describes posture change amount information related to an amount of change in the posture of the drive mechanism 13 and the support structure 16, which corresponds to the number of times (number of layers) of the powder material supplied. For example, when the second layer of powder material L2 is spread over on the table 12, the total weight W1 + W2 of the first and second layers of powder material is applied to the table 12. Therefore, in this case, the posture change amount information describes a posture change amount C2 of the drive mechanism 13 and the support structure 16 when the total weight W1 + W2 of the powder material on the first and second layers is applied to the table 12. In this case, the displacement amount d2, which is a deviation from the target position of the table 12 when the posture change amount is C2 (that is, the target position for spreading over the next third layer of powder material while the weight of the first and second layers of powder material is applied to the table 12), is described in the information table. When spreading over the powder material of the third layer, the control unit 17 sends to the drive mechanism 13 a corrected position command in which an amount of movement to the target position is corrected by the displacement amount d2. The posture change amount described in the information table is determined in advance, for example, by numerical simulation.

In this way, the additive manufacturing apparatus 1 of this embodiment performs position control of the table 12, considering the deviation of the table 12 from the target position due to the weight of the powder material that is progressively spread over on the table 12. Therefore, the table 12 is positioned at or near the target position when spreading over the powder material and when emitting the beam to the powder material. This keeps the proper distance between the powder material and the beam head 15 and improves the accuracy of the additive manufacturing.

In the additive manufacturing apparatus 1, the table 12 that moves in the up-down direction is supported by the drive mechanism 13 that is provided on the left and right sides of the table 12 and extends in the up-down direction. In the additive manufacturing apparatus 1 having this configuration, the drive mechanism 13 tends to tilt (deflect) due to the load applied to the table 12, and its posture is prone to change. In other words, the table 12 is likely to deviate from the target position due to the weight of the powder material. However, the control unit 17 performs position control of the table 12, considering the deviation of the table 12 from the target position due to the weight of the powder material. Therefore, with the additive manufacturing apparatus 1, the accuracy of the additive manufacturing is improved, even if the configuration is such that the table 12 is likely to deviate from the target position due to the weight of the powder material.

The description of the above-described embodiments is illustrative in all respects and is not intended to be limiting. Modifications and variations can be made as appropriate by a person skilled in the art. The scope of the present disclosure is indicated by the claims, not by the embodiments described above. Further, the scope of the present invention includes modifications of the embodiments that fall within the scope of the patent claims and the equivalents.

For example, correction of the position command sent to the drive mechanism may be performed each time the powder material is spread over on the table, or may be performed after spreading over a predetermined number of layers of the powder material.

For example, while the above embodiment deals with a case where the deviation from the target position of the table is calculated based on changes in the postures of both the drive mechanism and the support structure, the deviation from the target position of the table may be calculated based on a change in the posture of either the drive mechanism or the support structure.

### [LISTING OF REFERENCE CHARACTERS]

1: Additive Manufacturing Apparatus
11: Processing Chamber
12: Table
13: Drive Mechanism
131: Ball Screw
1311: Screw Shaft
1312: Ball Nut
1313: Fixing Member
132: Slide Unit
133: Guide Unit
134: Drive Device
14: Material Supply Mechanism
15: Beam Head
16: Support Structure
17: Control Unit
18: Column
19: Basket
191: Bottom
192: Sidewall
M, M1, M2: Powder Material
P1, P2: Target Position

## Claims

1. An additive manufacturing apparatus configured to form an object by powder-bed additive manufacturing in which a beam is emitted onto a powder material spread over a table to cure the powder material, comprising:
a table on which the powder material is to be spread over;
a material supply mechanism configured to supply a preset weight of the powder material to the table;
a drive mechanism configured to support the table and move the table in an up-down direction;
a support structure configured to support the drive mechanism and support the table via the drive mechanism; and
a control unit configured to control the drive mechanism to move the table step by step in the up-down direction, thereby controlling a position of the table in the up-down direction at a time of supply of the powder material to the table so that the powder material is sequentially layered on the table by the material supply mechanism,
wherein the drive mechanism is arranged at a position shifted in a horizontal direction with respect to the table, extends in the up-down direction, and supports and moves the table along the up-down direction, and
wherein the control unit is configured to correct the position of the table in the up-down direction at the time of supply of the powder material to the table based on a posture change caused by deformation of at least one of the drive mechanism and support structure due to the weight of the powder material spread on the table.

2. The additive manufacturing apparatus of claim 1, wherein
the control unit is configured to control the table based on a preset position command so that the table is positioned at a target position when the powder material is supplied, and correct the position command so as to reduce displacement of the table from the target position due to the weight of the powder material spread over the table.

3. The additive manufacturing apparatus of claim 2, wherein
the control unit is configured to correct the position command based on a preset amount of displacement of the table from the target position due to a posture change of at least one of the drive mechanism and support structure.

4. The additive manufacturing apparatus of claim 2, wherein
the control unit is configured to change a correction amount for the position command according to the number of times the powder material is supplied to the table.

5. The additive manufacturing apparatus of claim 1, wherein
the support structure is provided to be positioned outward of the drive mechanism in the horizontal direction and be adjacent to the drive mechanism, and supports both ends of the drive mechanism.
